# FASCICULE DE BREVET EUROPEEN

(11) **EP 1 434 932 B1**
(45) Date de publication et mention de la délivrance du brevet: **30.05.2007**
(21) Numéro de dépôt: 02779609.3
(22) Date de dépôt: 02.08.2002
(51) Int. Cl.: F02B 23/10, F02F 3/26

(54) **MOTEUR A COMBUSTION INTERNE, A ALLUMAGE COMMANDE, ET A INJECTION DIRECTE D'ESSENCE, COMPORTANT UN SYSTEME D'INJECTION DIRECTE A TRES HAUTE PRESSION**
VERBRENNUNGSMOTOR MIT FREMDZÜNDUNG UND DIREKTER KRAFTSTOFFEINSPRITZUNG, UMFASSEND EIN SYSTEM ZUR DIREKTEINSPRITZUNG UNTER SEHR HOHEM DRUCK
INTERNAL COMBUSTION ENGINE WITH SPARK IGNITION AND DIRECT FUEL INJECTION COMPRISING A VERY HIGH-PRESSURE DIRECT INJECTION SYSTEM

(30) Priorité: 10.10.2001 FR 0113051
(43) Date de publication de la demande: 07.07.2004
(73) Titulaire: Peugeot Citroen Automobiles SA, 92200 Neuilly sur Seine (FR)
(72) Inventeur: BOURGUIGNON, Eric, F-95160 Montmorency (FR); SULKOWSKI, Pascal, F-92500 Rueil-Malmaison (FR)
(74) Mandataire: Thinat, Michel
(86) Numéro de dépôt international: PCT/FR2002/002794
(87) Numéro de publication internationale: WO 2003/042519

(56) Documents cités:
- EP-A- 1 136 685
- DE-A- 10 007 659
- DE-A- 19 704 640
- US-A- 5 771 857
- US-A- 5 992 353

## Description

La présente invention concerne, de façon générale, les techniques d'injection pour moteurs à essence à injection directe.

Plus précisément, l'invention concerne un moteur à combustion interne, à allumage commandé et à injection directe d'essence, ce moteur comprenant, au moins, un cylindre allongé suivant un axe, une culasse obturant le cylindre de façon fixe, un piston monté coulissant de façon étanche dans le cylindre le long de l'axe du cylindre, une chambre de combustion définie dans le cylindre entre une face inférieure de la culasse et une face supérieure du piston, un injecteur d'essence lié à la culasse et débouchant dans la chambre de combustion, une bougie d'allumage liée à la culasse et dotée d'électrodes produisant sélectivement une étincelle dans la chambre de combustion, des soupapes d'admission et d'échappement montées mobiles dans la culasse, disposées de part et d'autre d'un plan axial médian du cylindre, et obturant sélectivement la chambre de combustion, et une pompe d'injection fournissant sélectivement à l'injecteur un flux d'essence sous pression.

Bien que cette définition utilise, par souci de clarté, des termes très concrets et précis tels que injecteur, bougie, ou étincelle, il faut comprendre que ces termes couvrent leurs équivalents techniques, les mots cités en exemple étant ainsi respectivement synonymes de moyen d'injection, de moyen d'allumage, et de point d'allumage.

Les moteurs ainsi définis sont bien connus de l'homme de l'art.

Les moteurs à allumage commandé à injection directe d'essence offrent la possibilité d'un fonctionnement optimisé avec des mélanges dits "pauvres", c'est-à-dire des mélanges carburés contenant un très fort excès d'air par rapport à la quantité de carburant introduite dans le cylindre, relativement aux conditions stoechiométriques.

Non seulement ces moteurs offrent un potentiel important en terme de réduction de consommation de carburant, mais ils participent également au respect de l'environnement dans la mesure où l'excès d'air permet une combustion complète du carburant et évite ainsi le rejet de fractions imbrûlées dans les gaz d'échappement.

Le mélange carburé qui résulte de l'injection de carburant dans le cylindre peut être un mélange homogène ou un mélange stratifié dans lequel le rapport air /carburant n'est pas uniforme dans tout le cylindre, ce dernier cas conduisant à localiser près du point d'allumage du mélange carburé dans un rapport air /carburant inflammable.

Différentes solutions sont connues pour réaliser un mélange stratifié grâce à l'injection directe d'essence.

Une première solution consiste à réaliser une stratification par effet de paroi en dirigeant le jet d'injection vers une paroi, par exemple en direction de la face supérieure du piston, pour le dévier ensuite vers la bougie. Cette solution peut présenter l'inconvénient de conduire à la formation, sur les parois, d'un film de carburant liquide qui brûle en produisant des suies. Par ailleurs, cette solution ne permet pas une stratification optimale, car l'impact du jet sur la paroi conduit à une diffusion trop grande.

Un seconde solution consiste à réaliser une stratification par effet aérodynamique en donnant à l'air un mouvement bien défini, de façon à diriger le carburant projeté par l'injecteur vers la bougie. Toutefois, la localisation du carburant autour de la bougie varie beaucoup d'un cycle à l'autre en raison du caractère aléatoire et turbulent de l'écoulement d'air, ce qui nuit à la stabilité du moteur et le rend difficile à contrôler.

La troisième solution consiste à positionner l'injecteur et la bougie de manière que le jet de carburant soit projeté directement par l'injecteur vers la bougie. Ce procédé est a priori très performant mais peut être sensible aux incertitudes affectant le positionnement et aux caractéristiques du jet de carburant. La réalisation du mélange stratifié résulte de l'injection du carburant peu de temps avant le déclenchement de la combustion. Dans ces conditions, contrairement aux deux précédentes solutions, le temps disponible pour l'injection, l'atomisation, la vaporisation de l'essence et la préparation du mélange avant le déclenchement de la combustion est très souvent insuffisant. Le carburant liquide, présent lors de la combustion et difficilement inflammable, provoque alors un encrassement de la bougie.

Une autre technique consiste à assister l'injection de carburant par une injection auxiliaire d'air. Si ce procédé conduit à une pulvérisation relativement fine du carburant, il requiert en revanche le recours à un système supplémentaire pour la compression d'air.

Une autre technique d'injection connue, décrite dans le brevet US 5 992 353, consiste à procéder à l'injection de carburant à l'état de vapeur et en mélange avec de la vapeur d'eau surchauffée à une pression au moins égale à 350 bars. Cette solution est concrètement inapplicable aux véhicules automobiles, dans la mesure où elle requiert l'embarquement d'un réservoir auxiliaire d'eau et un échangeur de chaleur utilisant les gaz d'échappement pour vaporiser le carburant et obtenir la vapeur surchauffée.

Dans ce contexte, la présente invention a pour but de proposer un moteur qui, bien que de structure relativement simple, fonctionne avec une très faible production de suies, avec une combustion de carburant plus rapide et reproductible, et sans encrassage des trous de l'injecteur.

A cette fin, le moteur de l'invention, par ailleurs conforme à la définition générique qu'en donne le préambule ci-dessus, est essentiellement caractérisé en ce que la pression du flux d'essence fourni à l'injecteur dépasse 300 bars, et est de préférence au moins égale à environ 500 bars.

Grâce à cette pression d'injection, la durée de l'injection du carburant dans la chambre de combustion peut être réduite en raison de l'augmentation du débit statique. De plus, le temps ainsi gagné peut être mis à profit pour la réalisation physique de l'atomisation, de l'évaporation et du mélange du carburant avec l'air.

Le carburant liquide injecté à cette haute pression subit une atomisation primaire qui brise le jet en grosses gouttes, puis une atomisation secondaire qui casse ces grosses gouttes en gouttes plus fines. La longueur dite de "Break up" (c'est-à-dire de fractionnement), qui caractérise la longueur du jet nécessaire à la réalisation du jet primaire, est réduite par l'augmentation de la vitesse de sortie du carburant de l'injecteur, laquelle croît avec la pression d'injection.

Il est apparu que pour les pressions supérieures à 300 bars, la longueur de fractionnement devenait négligeable. Le carburant sort alors directement de l'injecteur à l'état de brouillard de gouttelettes dont l'atomisation secondaire est plus fine. Le jet est plus large, ce qui favorise un mélange avec l'air contenu dans la chambre de combustion et la vaporisation du carburant. L'atomisation plus fine du carburant permet une vaporisation plus rapide et l'obtention d'un mélange air / carburant entièrement évaporé et mélangé à l'instant du déclenchement de la combustion. Le mélange obtenu est plus homogène, brûle plus rapidement, et produit moins de suies. La quantité de carburant liquide qui atteint la bougie est diminuée, ce qui réduit l'encrassement de la bougie. L'augmentation de la vitesse de combustion permet un déclenchement de la combustion plus près du point mort haut du piston dans le cylindre, et donc une augmentation du rendement du cycle. La réduction des polluants et des suies permet une augmentation sensible du rendement de combustion.

De plus, le gain de temps dans la réalisation de chacune des phase d'injection, d'atomisation, et de vaporisation permet d'injecter plus tard pendant la phase de compression, donc dans des conditions de pression plus élevée, favorable à une réduction de la pénétration du jet, et à une température plus élevée, favorable à la vaporisation.

Dans un mode de réalisation avantageux de l'invention, un évidement peut être creusé dans la face supérieure du piston pour assurer un confinement de l'essence injectée dans la chambre de combustion.

De son côté, la face inférieure de la culasse peut être conformée en toit et présenter une arête dans le plan axial médian du cylindre.

De préférence, l'injecteur est plus proche de l'axe du cylindre que ne l'est la bougie, et par exemple disposé sur l'axe du cylindre lui-même.

L'injecteur et la bougie sont avantageusement séparés par une distance au moins égale à 5 millimètres et au plus égale à 30 millimètres.

L'injecteur peut injecter l'essence dans la chambre de combustion sensiblement sous forme d'un cône d'injection présentant un angle au sommet au moins égal à 40 degrés et au plus égal à 100 degrés, ce cône pouvant être formé soit d'un jet unique, tel qu'un jeu creux et continu, soit de plusieurs jets distincts, et par exemple de deux à douze jets.

L'injecteur et l'étincelle produite par la bougie peuvent être séparés par une distance au moins égale à 10 millimètres et au plus égale à 30 millimètres, alors que le cône d'injection et les étincelles de la bougie sont par exemple séparés par une distance au moins égale à 1 millimètre et au plus égale à 10 millimètres.

Le moteur de l'invention comprend de préférence deux soupapes d'admission d'un premier côté du plan axial médian du cylindre et deux soupapes d'échappement d'un second côté du plan axial médian du cylindre, la bougie pouvant être disposée entre les deux soupapes d'admission, ou entre une soupape d'admission et une soupape d'échappement.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en coupe schématique partielle d'un moteur conforme à l'invention;
- la Figure 2 est une vue de dessous à échelle réduite de la face inférieure de la culasse du moteur illustré à la figure 1; et
- la Figure 3 est une vue semblable à la figure 2, illustrant une variante de réalisation.

Comme annoncé précédemment, l'invention concerne un moteur à combustion interne, à allumage commandé et à injection directe d'essence.

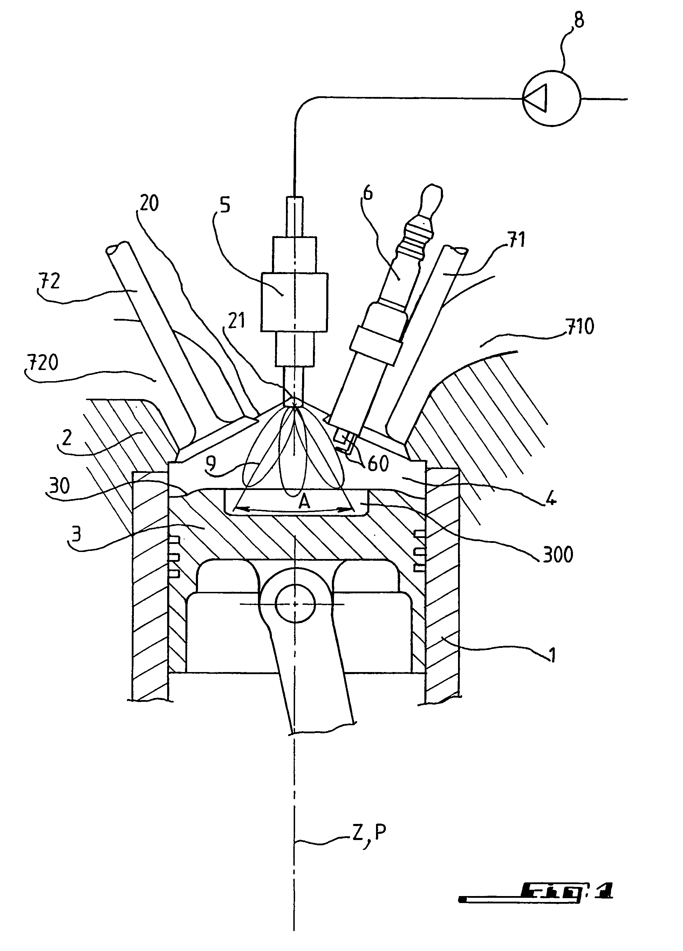

Ce moteur comprend, de façon non limitative et connue en soi (figure 1), un cylindre 1, une culasse 2, un piston 3, une chambre de combustion 4, un injecteur d'essence 5, une bougie d'allumage 6, une ou de préférence deux soupapes d'admission 71, une ou de préférence deux soupapes d'échappement 72, et une pompe d'injection 8.

Le cylindre 1 est allongé suivant son axe longitudinal Z et obturé, à une de ses extrémités, par la culasse 2 qui est fixée au cylindre 1.

Le piston 3 est monté coulissant de façon étanche dans le cylindre 1 le long de l'axe Z, et obture l'autre extrémité de ce cylindre.

La chambre de combustion 4 est ainsi définie dans le cylindre 1 entre la face inférieure 20 de la culasse 2 et la face supérieure 30 du piston 3.
d'essence 5 est lié à la culasse 2 et débouche dans la chambre de combustion 4.

La bougie d'allumage 6 est liée à la culasse 2 et dotée d'électrodes 60 qui produisent une étincelle dans la chambre de combustion 4 lorsque le piston 3 est au voisinage de son point mort haut.

Les soupapes d'admission 71 et d'échappement 72 sont montées mobiles dans la culasse 2 et sont disposées de part et d'autre d'un plan axial médian P du cylindre 1 de manière à définir un côté admission et un côté échappement.

Les deux soupapes d'admission 71 sont mues par un arbre à cames, ou commandées directement, de manière à mettre la chambre de combustion 4, à un instant choisi précédant la compression, en communication avec les conduits d'admission 710.

De façon analogue, les deux soupapes d'échappement 72 sont mues par un arbre à cames, ou commandées directement, de manière à mettre la chambre de combustion 4, à un instant choisi postérieur à la combustion, en communication avec les conduits d'échappement 720.

Enfin, la pompe d'injection 8 fournit à l'injecteur 5 un flux d'essence sous pression à un instant choisi lors de la compression.

Selon un aspect essentiel de l'invention, la pression du flux d'essence fourni à l'injecteur 5 par la pompe 8 dépasse 300 bars et, de préférence, atteint ou dépasse 500 bars.

D'autres caractéristiques, bien que moins importantes, peuvent être prévues pour optimiser les effets obtenus par la pression d'injection élevée prescrite par l'invention, et sont énumérées ci-après.

Tout d'abord, un évidement concave 300 peut être creusé dans la face supérieure 30 du piston 3 pour assurer un confinement de l'essence injectée dans la chambre de combustion 4.

D'autre part, la face inférieure 20 de la culasse 2 peut être conformée en toit et présenter une arête 21 dans le plan axial médian P du cylindre 1.

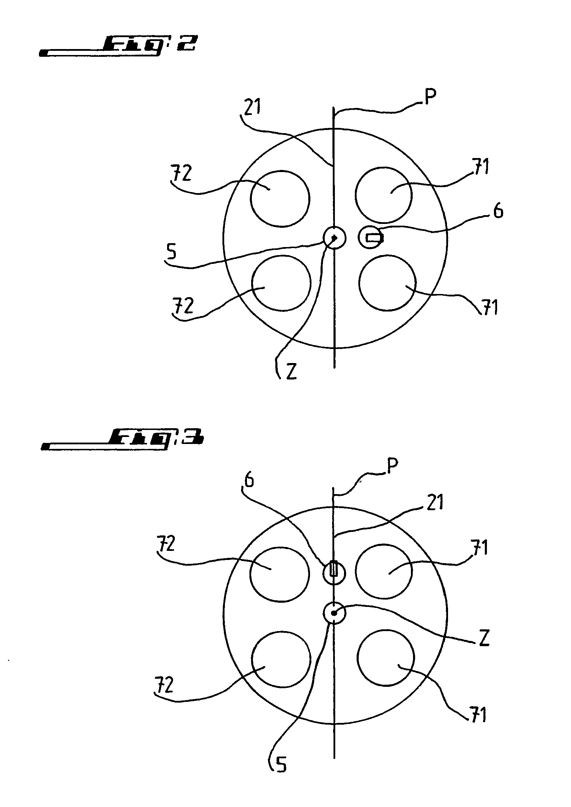

Comme le montrent les figures 2 et 3, l'arête 21 sépare ainsi la culasse 2 en une partie dédiée à l'admission (à droite sur les figures) et dans laquelle sont prévues les deux soupapes d'admission 71, et une partie dédiée à l'échappement (à gauche sur les figures) et dans laquelle sont prévues les deux soupapes d'échappement 72.

La bougie 6 peut alors être disposée entre les deux soupapes d'admission 71 (figures 1 et 2), ou entre une soupape d'admission 71 et une soupape d'échappement 72 (figure 3).

L'injecteur 5 est disposé plus près de l'axe Z du cylindre que ne l'est la bougie 6, et de préférence sur l'axe Z lui-même.

L'injecteur 5 et la bougie 6 sont séparés par une distance avantageusement comprise entre 5 millimètres et 30 millimètres, la distance entre l'injecteur 5 et l'étincelle produite par la bougie 6 étant alors typiquement comprise entre 10 millimètres et 30 millimètres.

L'injecteur 5 injecte de préférence l'essence dans la chambre de combustion 4 sous forme d'une pluralité de jets distincts comprenant entre deux et douze jets.

Ces jets forment un cône d'injection 9 (figure 1), qui présente un angle au sommet A par exemple compris entre 40 degrés et 100 degrés.

Enfin, le cône d'injection 9 et les étincelles formées par les électrodes 60 de la bougie sont séparés par une distance de préférence comprise entre 1 millimètre et 10 millimètres.

## Revendications

1. Moteur à combustion interne, à allumage commandé et à injection directe d'essence, ce moteur comprenant, au moins, un cylindre (1) allongé suivant un axe (Z), une culasse (2) obturant le cylindre (1) de façon fixe, un piston (3) monté coulissant de façon étanche dans le cylindre (1) le long de l'axe (Z) du cylindre, une chambre de combustion (4) définie dans le cylindre (1) entre une face inférieure (20) de la culasse (2) et une face supérieure (30) du piston (3), un injecteur d'essence (5) lié à la culasse (2) et débouchant dans la chambre de combustion (4), une bougie d'allumage (6) liée à la culasse (2) et dotée d'électrodes (60) produisant sélectivement une étincelle dans la chambre de combustion (4), des soupapes d'admission (71) et d'échappement (72) montées mobiles dans la culasse (2), disposées de part et d'autre d'un plan axial médian (P) du cylindre (1), et obturant sélectivement la chambre de combustion (4), et une pompe d'injection (8) fournissant sélectivement à l'injecteur (5) un flux d'essence sous pression, **caractérisé en ce que** la pression du flux d'essence fourni à l'injecteur (5) dépasse 300 bars.

2. Moteur à combustion interne suivant la revendication 1, **caractérisé en ce que** la pression du flux d'essence fourni à l'injecteur (5) est au moins égale à 500 bars.

3. Moteur à combustion interne suivant la revendication 1 ou 2, **caractérisé en ce qu'**un évidement (300) est creusé dans la face supérieure (30) du piston (3) pour assurer un confinement de l'essence injectée dans la chambre de combustion (4).

4. Moteur à combustion interne suivant l'une quelconque des revendications précédentes, **caractérisé en ce que** la face inférieure (20) de la culasse (2) est conformée en toit et présente une arête (21) dans le plan axial médian (P) du cylindre (1).

5. Moteur à combustion interne suivant l'une quelconque des revendications précédentes, **caractérisé en ce que** l'injecteur (5) est plus proche de l'axe (Z) du cylindre que ne l'est la bougie (6).

6. Moteur à combustion interne suivant l'une quelconque des revendications précédentes, **caractérisé en ce que** l'injecteur (5) est disposé sur l'axe (Z) du cylindre.

7. Moteur à combustion interne suivant l'une quelconque des revendications précédentes, **caractérisé en ce que** l'injecteur (5) et la bougie (6) sont séparés par une distance au moins égale à 5 millimètres et au plus égale à 30 millimètres.

8. Moteur à combustion interne suivant l'une quelconque des revendications précédentes, **caractérisé en ce que** l'injecteur (5) injecte l'essence dans la chambre de- combustion (4) sensiblement sous forme d'un cône d'injection (9) présentant un angle au sommet (A) au moins égal à 40 degrés et au plus égal à 100 degrés.

9. Moteur à combustion interne suivant l'une quelconque des revendications précédentes, **caractérisé en ce que** l'injecteur (5) injecte l'essence dans la chambre de combustion (4) sous forme d'une pluralité de jets distincts comprenant entre deux jets et douze jets.

10. Moteur à combustion interne suivant l'une quelconque des revendications précédentes, **caractérisé en ce que** l'injecteur (5) et l'étincelle produite par la bougie (6) sont séparés par une distance au moins égale à 10 millimètres et au plus égale à 30 millimètres.

11. Moteur à combustion interne suivant l'une quelconque des revendications précédentes combinée à la revendication 8, **caractérisé en ce que** le cône d'injection (9) et les étincelles de la bougie sont séparés par une distance au moins égale à 1 millimètre et au plus égale à 10 millimètres.

12. Moteur à combustion interne suivant l'une quelconque des revendications précédentes, **caractérisé en ce qu'**il comprend deux soupapes d'admission (71) d'un premier côté du plan axial médian (P) du cylindre et deux soupapes d'échappement (72) d'un second côté du plan axial médian (P) du cylindre, et **en ce que** la bougie (6) est disposée entre les deux soupapes d'admission (71).

13. Moteur à combustion interne suivant l'une quelconque des revendications 1 à 11, **caractérisé en ce qu'**il comprend deux soupapes d'admission (71) d'un premier côté du plan axial médian (P) du cylindre et deux soupapes d'échappement (72) d'un second côté du plan axial médian (P) du cylindre, et **en ce que** la bougie (6) est disposée entre une soupape d'admission (71) et une soupape d'échappement (72).

## Claims

1. An internal combustion engine, with spark ignition and direct fuel injection, this engine comprising at least, one elongated cylinder (1) along an axis (Z), one cylinder head (2) fixedly sealing off the cylinder (1), one piston (3) slidably and sealably mounted in the cylinder (1) along the axis (Z) of the cylinder, one combustion chamber (4) defined in the cylinder (1) between a lower face (20) of the cylinder head (2) and an upper face (30) of the piston (3), one fuel injector (5) connected to the cylinder head (2) and opening out into the combustion chamber (4), one spark plug (6) connected to the cylinder head (2) and provided with electrodes (60) selectively producing a spark in the combustion chamber (4), intake (71) and exhaust (72) valves movably mounted in the cylinder head (2), positioned on either side of a median axial plane (P) of the cylinder (1), and selectively sealing off the combustion chamber (4), and one injection pump (8) selectively providing to the injector (5) a flow of pressurized fuel, **characterized in that** the fuel flow pressure provided to the injector (5) exceeds 300 bars.

2. The internal combustion engine according to claim 1, **characterized in that** the fuel flow pressure provided to the injector (5) is at least equal to 500 bars.

3. The internal combustion engine according to claim 1 or 2, **characterized in that** a recess (300) is cut out in the upper face (30) of the piston (3) in order to provide confinement of the fuel injected into the combustion chamber (4).

4. The internal combustion engine according to any of the preceding claims, **characterized in that** the lower face (20) of the cylinder head (2) is conformed as a roof and has an edge (21) in the median axial plane (P) of the cylinder (1).

5. The internal combustion engine according to any of the preceding claims, **characterized in that** the injector (5) is closer to the axis (Z) of the cylinder than is the spark plug (6).

6. The internal combustion engine according to any of the preceding claims, **characterized in that** the injector (5) is positioned on the axis (Z) of the cylinder.

7. The internal combustion engine according to any of the preceding claims, **characterized in that** the injector (5) and the spark plug (6) are separated by a distance at least equal to 5 millimeters and at most equal to 30 millimeters.

8. The internal combustion engine according to any of the preceding claims, **characterized in that** the injector (5) injects fuel into the combustion chamber (4) substantially in the form of an injection cone (9) having an apex angle (A) at least equal to 40 degrees and at most equal to 100 degrees.

9. The internal combustion engine according to any of the preceding claims, **characterized in that** the injector (5) injects fuel into the combustion chamber (4) in the form of a plurality of distinct jets, comprising between two jets and twelve jets.

10. The internal combustion engine according to any of the preceding claims, **characterized in that** the injector (5) and the spark produced by the spark plug (6) are separated by a distance at least equal to 10 millimeters and at most equal to 30 millimeters.

11. The internal combustion engine according to any of the preceding claims, combined with claim 8, **characterized in that** the injection cone (9) and the sparks of the spark plug are separated by a distance at least equal to 1 millimeter and at most equal to 10 millimeters.

12. The internal combustion engine according to any of the preceding claims, **characterized in that** it comprises two intake valves (71) on a first side of the median axial plane (P) of the cylinder, and two exhaust valves (72) on a second side of the median axial plane (P) of the cylinder, and **in that** the spark plug (6) is positioned between both intake valves (71).

13. The internal combustion engine according to any of claims 1 to 11, **characterized in that** it comprises two intake valves (71) on a first side of the median axial plane (P) of the cylinder and two exhaust valves (72) on a second side of the median axial plane (P) of the cylinder, and **in that** the spark plug (6) is positioned between an intake valve (71) and an exhaust valve (72).

## Patentansprüche

1. Verbrennungsmotor mit Fremdzündung und direkter Kraftstoffeinspritzung, wobei dieser Motor mindestens einen in einer Achse (Z) ausgerichteten Zylinder (1), einen den Zylinder (1) fest verschließenden Zylinderkopf (2), einen im Zylinder entlang der Achse (Z) des Zylinders dicht gleitend montierten Kolben (3), eine im Zylinder (1) zwischen einer unteren Fläche (20) des Zylinderkopfs (2) und einer oberen Fläche (30) des Kolbens (3) definierte Brennkammer (4), eine mit dem Zylinderkopf (2) verbundene und in die Brennkammer (4) mündende Kraftstoffeinspritzung (5), eine mit dem Zylinderkopf (2) verbundene und mit Elektroden (60) ausgestattete Zündkerze (6), die selektiv einen Funken in der Brennkammer (4) produziert, beweglich im Zylinderkopf montierte Einlass- (71) und Auslassventile (72), die an der einen und der anderen Seite einer axialen Mittelebene (P) des Zylinders (1) angeordnet sind und selektiv die Brennkammer (4) verschließen, und eine Einspritzpumpe (8), die der Einspritzung (5) selektiv einen unter Druck stehenden Kraftstoffstrom bereitstellt, umfasst, **dadurch gekennzeichnet, dass** der Druck des der Einspritzung (5) bereitgestellten Kraftstoffstroms 300 bar übersteigt.

2. Verbrennungsmotor nach Anspruch 1, **dadurch gekennzeichnet, dass** der Druck des der Einspritzung (5) bereitgestellten Kraftstoffstroms mindestens gleich 500 bar beträgt.

3. Verbrennungsmotor nach Anspruch 1 oder 2, **dadurch gekennzeichnet, dass** in die obere Fläche (30) des Kolbens (3) eine Aussparung (300) eingearbeitet ist, um ein Einschließen des in die Brennkammer (4) eingespritzten Kraftstoffs zu gewährleisten.

4. Verbrennungsmotor nach einem der vorangehenden Ansprüche, **dadurch gekennzeichnet, dass** die untere Fläche (20) des Zylinderkopfs (2) als Dach ausgebildet ist und in der axialen Mittelebene (P) des Zylinders (1) einen Grat (21) aufweist.

5. Verbrennungsmotor nach einem der vorangehenden Ansprüche, **dadurch gekennzeichnet, dass** die Einspritzung (5) näher an der Achse (Z) des Zylinders ist als die Kerze (6).

6. Verbrennungsmotor nach einem der vorangehenden Ansprüche, **dadurch gekennzeichnet, dass** die Einspritzung (5) auf der Achse (Z) des Zylinders angeordnet ist.

7. Verbrennungsmotor nach einem der vorangehenden Ansprüche, **dadurch gekennzeichnet, dass** die Einspritzung (5) und die Kerze (6) durch einen Abstand getrennt sind, der mindestens gleich 5 Millimeter und höchstens gleich 30 Millimeter beträgt.

8. Verbrennungsmotor nach einem der vorangehenden Ansprüche, **dadurch gekennzeichnet, dass** die Einspritzung (5) den Kraftstoff in die Brennkammer (4) etwa in Form eines Einspritzkegels (9) einspritzt, der am Scheitel (A) einen Winkel von mindestens gleich 40 Grad und höchstens gleich 100 Grad aufweist.

9. Verbrennungsmotor nach einem der vorangehenden Ansprüche, **dadurch gekennzeichnet, dass** die Einspritzung (5) den Kraftstoff in die Brennkammer (4) in Form einer Mehrzahl verschiedener Strahlen einspritzt, von zwei bis zwölf Strahlen umfassend.

10. Verbrennungsmotor nach einem der vorangehenden Ansprüche, **dadurch gekennzeichnet, dass** die Einspritzung (5) und der von der Kerze (6) erzeugte Funke durch einen Abstand von mindestens gleich 10 Millimeter und höchstens gleich 30 Millimeter getrennt sind.

11. Verbrennungsmotor nach einem der vorangehenden Ansprüche in Kombination mit Anspruch 8, **dadurch gekennzeichnet, dass** der Einspritzkegel (9) und die Funken der Kerze durch einen Abstand von mindestens 1 Millimeter und höchstens 10 Millimeter getrennt sind.

12. Verbrennungsmotor nach einem der vorangehenden Ansprüche, **dadurch gekennzeichnet, dass** er zwei Einlassventile (71) an einer ersten Seite der axialen Mittelebene (P) des Zylinders und zwei Auslassventile (72) an einer zweiten Seite der axialen Mittelebene (P) des Zylinders umfasst, und dadurch, dass die Kerze (6) zwischen den zwei Einlassventilen (71) angeordnet ist.

13. Verbrennungsmotor nach einem der Ansprüche 1 bis 11, **dadurch gekennzeichnet, dass** er zwei Einlassventile (71) an einer ersten Seite der axialen Mittelebene (P) des Zylinders und zwei Auslassventile (72) an einer zweiten Seite der axialen Mittelebene (P) des Zylinders umfasst, und dadurch**,** dass die Kerze (6) zwischen einem Einlassventil (71) und einem Auslassventil (72) angeordnet ist.
